# EUROPÄISCHE PATENTSCHRIFT

(11) **EP 0 713 460 B1**
(45) Veröffentlichungstag und Bekanntmachung des Hinweises auf die Patenterteilung: **11.12.1996**
(21) Anmeldenummer: 94922228.5
(22) Anmeldetag: 09.08.1994
(51) Int. Cl.: B60R 25/04, B60R 25/00

(54) **WEGFAHRSPERRE FÜR EIN KRAFTFAHRZEUG**
DEVICE FOR PREVENTING UNAUTHORIZED USE OF A MOTOR VEHICLE
DISPOSITIF DE BLOCAGE DU DEMARRAGE D'UN VEHICULE AUTOMOBILE

(30) Priorität: 20.08.1993 DE 9312504 U; 30.09.1993 DE 4333474
(43) Veröffentlichungstag der Anmeldung: 29.05.1996
(73) Patentinhaber: SIEMENS AKTIENGESELLSCHAFT, 80333 München (DE)
(72) Erfinder: BACHHUBER, Anton, D-84085 Langquaid (DE)
(86) Internationale Anmeldenummer: DE9400917
(87) Internationale Veröffentlichungsnummer: WO9505958

(56) Entgegenhaltungen:
- EP-A- 0 373 337
- WO-A-93/05987
- GB-A- 2 251 503

## Beschreibung

Die Erfindung betrifft ein Wegfahrsperre, wie sie beispielsweise aus WO-A-/05987 bekannt ist.

Eine Wegfahrsperre ist eine Steuereinheit, die ein Kraftfahrzeug vor unberechtigtem Benutzen sichert. Hierzu wird von einem Zündschlüssel mit einem Transponder oder von einem tragbaren Transponder in Form einer Chipkarte ein Benutzercode an die Wegfahrsperre geschickt. Nur wenn der Benutzer berechtigt ist, läßt sich das Kraftfahrzeug starten. Bei Übereinstimmung des Benutzercodes mit einem Berechtigungscode wird beispielsweise die Motorsteuerung aktiviert. Durch den Versuch, dies mit nicht berechtigten Schlüsseln, Transponder oder durch Überbrücken der Wegfahrsperre zu erreichen, wird die Motorsteuerung hingegen nicht freigegeben.

Durch Austausch des Motorsteuergerät und Überbrücken der Wegfahrsperre läßt sich das Kraftfahrzeug dennoch auf Dauer benutzten.

Der Erfindung liegt das Problem zugrunde, eine Wegfahrsperre zu schaffen, die höchste Sicherheit vor unbefugtem Benutzen eines Kraftfahrzeugs - selbst bei Austausch von Steuergeräten - bietet, wobei die Verfügbarkeit des Kraftfahrzeugs gewährleistet sein soll.

Dieses Problem wird erfindungsgemäß durch die Merkmale des Anspruchs 1 und durch ein Verfahren nach Anspruch 6 gelöst.

Bei dieser Lösung weisen mehrere Steuergeräte, beispielsweise zum Steuern der Luftmenge, der Kraftstoffeinspritzung, der Zündung, des Getriebes, eines Airbags oder der Zentralverriegelung, jeweils einen Kennungscode auf, der bei Aufforderung durch die Wegfahrsperre über eine Datenleitung an eine Prüfeinheit geschickt und dort mit einem Sollcode verglichen wird. Falls nicht mindestens eine vorgegebene Anzahl von Steuergeräten mit ihrem Kennungscode oder gar nicht antwortet, dann verbleiben alle oder ein Teil der Steuergeräte in einem inaktiven Zustand, so daß das Kraftfahrzeug nicht gestartet oder gefahren werden kann.

Zum unberechtigten Benutzen des Kraftfahrzeug müßten nun schon alle Steuergeräte ausgetauscht werden, was allerdings sehr aufwendig ist.

Vorteilhafte Ausgestaltungen der Erfindung sind in den Unteransprüchen gekennzeichnet. Dabei kann die Prüfeinheit in einem Steuergerät untergebracht sein. Mit einem Kennungscodegeber können die Steuergeräte oder ausgetauschte Steuergeräte initialisiert werden. Bei dieser Wegfahrsperre wird vorübergehend toleriert, daß nicht zum Betrieb des Kraftfahrzeugs unbedingt notwendige Steuergeräte ausgefallen sind, sie müs-sen jedoch nach einer Zeitdauer ausgetauscht werden, da ansonsten das Kraftfahrzeug von der Prüfeinheit in einen inaktiven Zustand gebracht wird. Dies hat den Vorteil, daß das Kraftfahrzeug noch gestartet und zu einer Werkstatt gebracht werden kann, wenn ein - und zwar ein nicht zum Betrieb unbedingt notwendiges - Steuergerät oder die Prüfeinheit selber defekt ist und ausgetauscht werden muß. Die Prüfeinheit kann ein selbständiges, zum Betrieb des Kraftfahrzeugs unbedingt notwendiges Steuergerät sein. Sie kann aber auch in einem ohnehin vorhandenen Steuergerät untergebracht sein.

Die Anzahl der Startvorgänge kann durch einen Zähler aufaddiert werden. Die Prüfeinheit versetzt das Kraftfahrzeug in einen inaktiven Zustand, falls der Zählerstand nicht von Zeit zu Zeit von einer externen und autorisierten RESET-Einheit auf Null zurückgesetzt wird.

Ein Ausführungsbeispiel der Erfindung ist im folgenden unter Bezugnahme auf die schematische Zeichnung näher erläutert. Es zeigen:
- Figur 1:: eine Teilansicht einer erfindungsgemäßen Wegfahrsperre
- Figur 2:: ein Blockdiagramm der Wegfahrsperre und
- Figur 3:: ein Ablaufdiagramm eines Verfahrens zum Betreiben der Wegfahrsperre

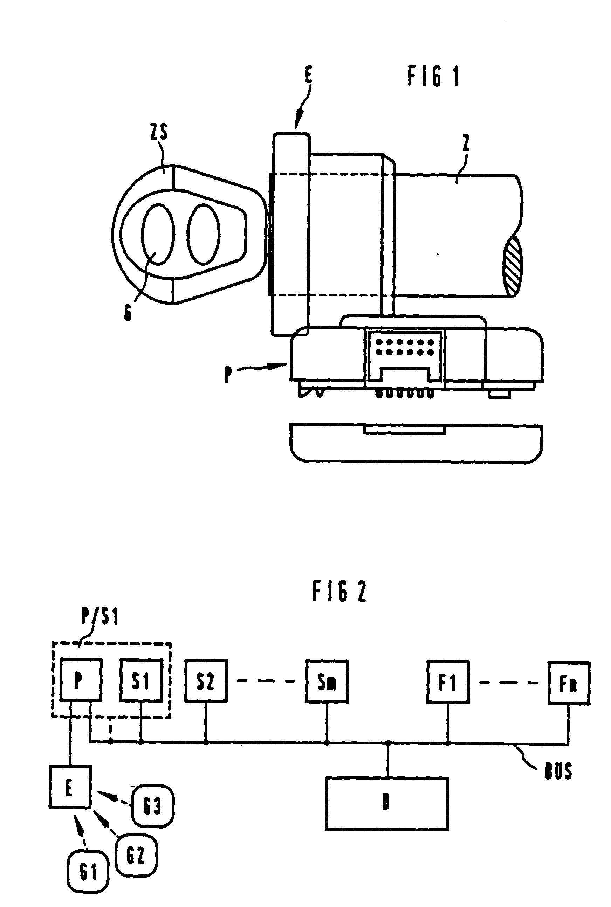

Eine Wegfahrsperre für ein Kraftfahrzeug kann das bestimmungsgemäße Benutzen eines Kraftfahrzeugs durch einen unberechtigten Benutzer verhindern. Eine Prüfeinheit P (Figur 1) der Wegfahrsperre kann in einem Gehäuse an dem Zündschloß Z des Fahrzeugs angeordnet sein. Sobald ein Zündschlüssel ZS im Schloß steckt und betätigt wird, wird durch die Wegfahrsperre die Berechtigung des Benutzers in der Prüfeinheit P überprüft.

Hierzu wird von einem Transponder G (Benutzercodegeber), der mit dem Zündschlüssel verbunden ist, ein Benutzercodewort (im folgenden als Benutzercode bezeichnet) an eine Sende- und Empfangsantenne E der Wegfahrsperre drahtlos übermittelt. Wenn mehrere Benutzer berechtigt sein sollen, so haben sie alle einen eigenen Zündschlüssel ZS mit jeweils eigenen Benutzercodes. Die Prüfeinheit P vergleicht den Benutzercode mit einem in der Prüfeinheit P gespeicherten Berechtigungscodewort (im folgenden als Berechtigungscode bezeichnet). Bei Übereinstimmung kann das Fahrzeug zum bestimmungsgemäßen Gebrauch freigegeben werden. Hierzu kann beispielsweise das Motorsteuergerät, das im ungeprüften Zustand gesperrt ist, entriegelt werden, so daß der Motor gestartet werden kann.

Damit die Wegfahrsperre nicht durch Austausch der Motorsteuerung allein umgangen werden kann, ist die Prüfeinheit P mit weiteren Steuergeräten Sᵢ und Fⱼ (Figur 2, mit i = 1 bis m und j = 1 bis n, Sᵢ sind betriebsrelevante Steuergeräte, wie Motorsteuerung, und Fⱼ sind nicht betriebsrelevante Steuergeräte, wie z.B. Airbag-Steuergerät) im Kraftfahrzeug über eine Datenleitung BUS verbunden. Alle Steuergeräte Sᵢ und Fⱼ sind ohnehin vorhanden, z.B. Zünd, ABS-, Zentralverriegelung-, Getriebe, Niveausteuergerät, usw., und werden beim Versuch, das Kraftfahrzeug zu starten durch die Wegfahrsperre überprüft. Bei unberechtigter Benutzung bleiben die betriebsrelevanten Steuergeräte gesperrt, so daß das Kraftfahrzeug nicht in Gang gesetzt werden kann. Um die Wegfahrsperre zu umgehen, müßten nun alle Steuergeräte Sᵢ und Fⱼ ausgetauscht werden.

Die Wegfahrsperre ist ein Sicherheitssystem bestehend aus der Prüfeinheit P mit ihrer Sende- und Empfangseinheit E, den Steuergeräten Sᵢ und Fⱼ, die über die Datenleitung BUS mit der Prüfeinheit P verbunden sind, sowie mehreren tragbaren Benutzercodegebern.

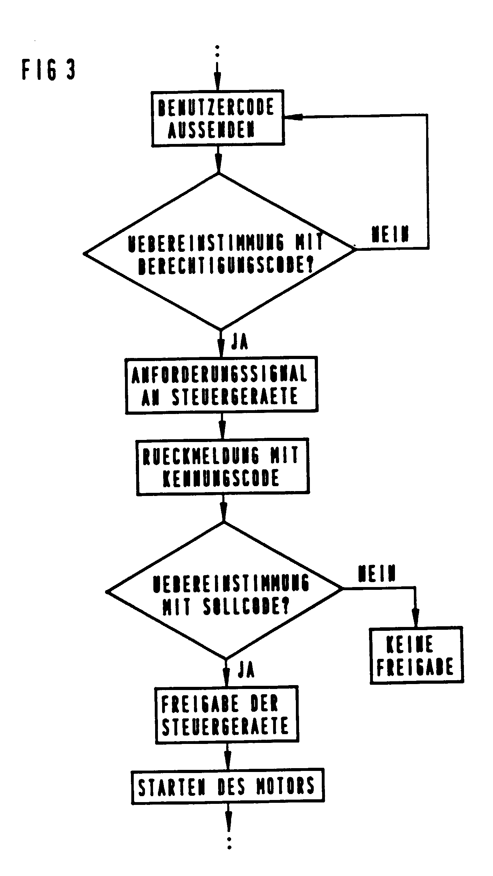

In jedem Steuergerät Sᵢ und Fⱼ ist ein Kennungscodewort (im folgenden als Kennungscode bezeichnet) gespeichert, das jeweils von der Prüfeinheit P abgefragt wird, um zu verhindern, daß mit einem Kennungscode versehene Steuergeräte Sᵢ und Fⱼ unerlaubterweise gegen nicht codierte Steuergeräte ausgetauscht werden. Wenn die Kennungscodes überprüft und alle berechtigt sind, so kann das Kraftfahrzeug durch Aktivieren zumindest eines betriebsrelevanten Steuergeräts Sᵢ in Gang gesetzt werden. Anhand der Figuren 2 und 3 wird die Wegfahrsperre und das Verfahren zu ihrem Betreiben näher erläutert.

Wenn ein Benutzer mit einem Benutzercodegeber Gₖ (im Ausführungsbeispiel mit k = 1 bis 3), z.B. in Form eines Zündschlüssels ZS, der einen Transponder G aufweist, oder in Form einer Chipkarte mit einem Transponder, das Fahrzeug benutzen möchte, so muß ein Dialog zwischen der Wegfahrsperre und dem Benutzercodegeber Gₖ stattfinden. Der Dialog kann beispielsweise durch Drehen des Zündschlüssels ZS im Zündschloß Z ausgelöst werden. Dabei wird überprüft, ob der Benutzercodegeber Gₖ berechtigt ist, das Fahrzeug zu starten. Hierzu wird der Benutzercode mit dem Berechtigungscode in der Prüfeinheit P verglichen.

Wenn beide Codes übereinstimmen, so wird ein Anforderungssignal über die Datenleitung BUS der Reihe nach an alle oder nur einen Teil der angeschlossenen Steuergeräte Sᵢ und Fⱼ geschickt. Diese empfangen das Anforderungssignal und werden dadurch veranlaßt, mit ihrem Kennungscode zu antworten. In der Prüfeinheit P wird dann registriert, ob und mit welchem Kennungscode die Steuergeräte Sᵢ und Fⱼ geantwortet haben. Hierzu werden die empfangenen Kennungscodes mit Sollcodeworten (Sollcodes) verglichen. Falls alle Steuergeräte Sᵢ und Fⱼ richtig geantwortet haben, wird - gesteuert durch die Prüfeinheit P - ein Freigabesignal an das oder die Steuergeräte Sᵢ geschickt, wodurch ein Starten des Kraftfahrzeug ermöglicht wird. Ansonsten verbleiben die Steuergeräte Sᵢ in einem inaktiven Zustand.

Die betriebsrelevanten Steuergeräte Sᵢ, d.h. die Steuergeräte, die unbedingt zum Betrieb des Kraftfahrzeugs notwendig sind, werden beim Abstellen des Kraftfahrzeugs in einen inaktiven Zustand versetzt. Zu den betriebsrelevanten Steuergeräten gehört auch die Prüfeinheit P, die ebenfalls im Ruhezustand des Kraftfahrzeugs gesperrt ist. Der inaktive Zustand kann nur durch einen berechtigten Benutzer wieder aufgehoben werden.

Falls eines der Steuergeräte Fⱼ, das nicht unbedingt zum Betrieb des Kraftfahrzeugs nötig ist, defekt ist und ersetzt werden muß, so kann es auf das Anforderungssignal gar nicht oder nur mit einem falschen Kennungscode antworten. Dies wird von der Prüfeinheit P erkannt. Der Fahrer wird durch ein optische oder akustische Anzeige gewarnt und auf die Notwendigkeit hingewiesen, daß das Kraftfahrzeug nur noch für eine kurze Dauer, beispielsweise für eine bestimmte Fahrtstrecke, eine vorgegebene Zeitdauer oder eine Anzahl von Startvorgängen, in Betrieb sein wird. Das Kraftfahrzeug kann somit z.B. aus dem Urlaub heimgeholt werden, damit es in der heimischen Werkstätte repariert und das defekte Steuergerät Fⱼ ausgetauscht werden kann. Falls das defekte Steuergerät Fⱼ nicht ausgetauscht wird, wird das Kraftfahrzeug nach Ablauf der Dauer durch die Prüfeinheit P still gelegt.

Aus diesem Grund genügt es, wenn bei der Abfrage nach den Kennungscodes - nicht alle, sondern - mindestens eine vorbestimmte Anzahl der Steuergeräte Sᵢ und Fⱼ mit ihrem Kennungscode antworten. Wenn beispielsweise vier Steuergeräte Sᵢ und Fⱼ abgefragt werden, so genügt es, daß drei mit einem gültigen Kennungscode antworten. Somit ist die Verfügbarkeit des Kraftfahrzeugs jederzeit gewährleistet. Es kann also nicht passieren, daß aufgrund eines defekten und ausgetauschten Steuergeräts, das nicht unbedingt zum Betrieb des Kraftfahrzeugs nötig ist, das Kraftfahrzeug überhaupt nicht mehr zu bewegen ist.

Antworten jedoch weniger als die vorbestimmte Anzahl von Steuergeräten Sᵢ und Fⱼ mit ihrem Kennungscode, so beläßt die Prüfeinheit P mindestens ein Steuergerät Sᵢ in einem inaktiven Zustand, so daß das Starten oder das Fahren des Kraftfahrzeugs verhindert wird. Demzufolge muß das inaktivierte Steuergerät Sᵢ ein betriebsrelevantes Steuergerät sein, da ansonsten die Wegfahrsperre nicht wirksam wäre.

Neue Steuergeräte Sᵢ und Fⱼ sind anfangs in einem Grundzustand (Neumodus). Der Neumodus wird von der Prüfeinheit P erkannt. Wenn sich alle oder der größte Teil der Steuergeräte Sᵢ und Fⱼ im Neumodus befinden, so werden alle Steuergeräte Sᵢ und Fⱼ mit einem Kennungscode und die Benutzercodegeber Gₖ mit einem Benutzercode versehen (Erstinitialisierung). Dies kann beispielsweise nach der Herstellung des Kraftfahrzeugs, d.h. am Bandende beim Automobilhersteller, mit Hilfe eines nicht dargestellten, autorisierten Kennungscodegebers geschehen. In diesem sind die Kennungscodes aller in dem Kraftfahrzeug vorhandenen Steuergeräte Sᵢ und Fⱼ gespeichert. Bei der Erstinitialisierung wird durch die Prüfeinheit P festgelegt, welche Steuergeräte Sᵢ und Fⱼ überhaupt von der Wegfahrsperre zu prüfen sind.

Die Erstinitialisierung ist irreversibel, d.h. sie kann durch einen Dieb nicht rückgängig gemacht werden. Die Steuergeräte Sᵢ und Fⱼ können also danach nicht mehr erstinitialisiert werden.

Nach der Erstinitialisierung gehen die Steuergeräte Sᵢ und Fⱼ in einen Betriebsmodus über. Nur im Betriebsmodus kann das Kraftfahrzeug gestartet werden, wenn der Start durch einen berechtigten Benutzercodegeber Gₖ ausgelöst wurde und eine Mindestanzahl von Steuergeräten Sᵢ und Fⱼ mit der Prüfeinheit P über die Datenleitung BUS verbunden sind.

Gegen defekte Steuergeräte Sᵢ und Fⱼ ausgetauschte neue Steuergeräte Sᵢ und Fⱼ sind anfangs ebenfalls im Neumodus. Dies wird von der Prüfeinheit P erkannt. In diesem Fall kann nur das neue Steuergerät Sᵢ oder Fⱼ erstmals initialisiert (Re-Initialisierung) werden, wenn von der Prüfeinheit P erkannt wird, daß die restlichen Steuergeräte Sᵢ und Fⱼ mit ihrem Kennungscode antworten und mindestens ein berechtigter Benutzercodegeber Gₖ vorhanden ist.

Die Erst- und die Re-Initialisierung können auch über eine Diagnose-Schnittstelle D, die ohnehin im Kraftfahrzeug vorhanden und mit der Datenleitung BUS verbunden ist, erfolgen.

Mit einem nicht dargestellten Diagnosegerät, das an die Diagnose-Schnittstelle D angeschlossen wird, können die einzelnen Steuergeräte Sᵢ und Fⱼ beispielsweise mit den Kennungscodes versehen werden, wenn dies durch einen berechtigten Kennungscodegeber autorisiert wird.

Neue Steuergeräte Sᵢ und Fⱼ befinden sich immer im Neumodus. Der Neumodus wird sowohl bei der Erstinitialisierung als auch bei der Re-Initialisierung erkannt. Bei der Re-Initialisierung muß ausgeschlossen sein, das ein unberechtigter Benutzer nur ein Steuergerät Sᵢ oder Fⱼ austauscht und dann alle Steuergeräte Sᵢ und Fⱼ des Kraftfahrzeugs neu initialisiert.

Es können auch mehrere Prüfeinheiten P in der Wegfahrsperre eingebunden sein. Eine zweite Prüfeinheit P kann dann die Funktion der ersten Prüfeinheit P übernehmen, falls diese defekt ist und dies beim ersten Startversuch festgestellt wird.

Die Kennungscodes und die Benutzercodes können mindestens in einer weiteren Prüfeinheit P, in einem beim Hersteller befindlichen Zentralrechner, in einem Steuergerät Sᵢ oder Fⱼ oder in jedem Benutzercodegeber Gₖ gespeichert sein, von wo sie bei berechtigtem Zugriff zum Re-Initialisieren der Steuergeräte Sᵢ und Fⱼ ausgelesen werden können, falls die Prüfeinheit P einmal ausgefallen sein sollte. Die Berechtigung zum Re-Initialisieren kann durch einen Transponder, der sich bei dem Fahrzeugbrief befindet, nachgewiesen werden.

Die Prüfeinheit P braucht nicht unbedingt als separates Gerät ausgeführt zu sein. Es kann in einem Steuergerät Sᵢ untergebracht sein (in Figur 2 durch P/S1 und die gestrichelte Linie angedeutet) und dort Bauelemente, wie Mikroprozessor oder Speicherelemente, des Steuergeräts Sᵢ mitbenutzen, die ohnehin in dem Steuergerät vorhanden sind.

Um einem Car-Napping vorzubeugen, kann die Wegfahrsperre so ausgelegt sein, daß beispielsweise die Anzahl der Motorstarts oder die Fahrstrecke durch einen Zähler in der Prüfeinheit P oder in mehreren Zählern in den jeweiligen Steuergeräte Sᵢ und Fⱼ durch In- oder Dekrementieren erfaßt wird. Bei einem vorgegebenen Zählerstand wird das Kraftfahrzeug still gelegt, wenn der Zähler nicht vorher durch eine externe und separate RESET-Einheit auf Null zurückgesetzt wurde.

Ein RESET kann nur unter Verwendung eines zentral beim Hersteller oder in einem eigenen Transponder, der an den Fahrzeugbrief geheftet ist, gespeicherten RESET-Codes vorgenommen werden. Die RESET-Einheit kann beispielsweise zu Hause in der Garage angeordnet sein. Sie kann per Funk den Zählerstand beeinflussen. Ebenso kann der RESET bei einer autorisierten Werkstatt unter Vorlage des Fahrzeugbriefs bei jeder Inspektion vorgenommen werden.

Somit wird ein gestohlenes Fahrzeug nach einiger Zeit unbrauchbar, wenn nicht mit einer autorisierten RESET-Einheit der Zählerstand auf Null zurückgesetzt wird.

Ein Zähler kann auch in dem Benutzercodegeber Gₖ vorhanden sein. Bei jeder Betätigung des Benutzercodegebers Gₖ wird der Zähler um Eins erhöht oder erniedrigt. Der Benutzercodegeber Gₖ kann nur bis zu einem vorbestimmten Zählerstand benutzt werden. Deshalb muß der Zähler von Zeit zu Zeit auf Null gesetzt werden.

Die Kennungscodes, Benutzercodes und dergleichen, können sogenannte Festcodes sein, die jeweils fest in Speichereinheiten gespeichert sind. Sie können sich auch ständig ändern (sogenannte Wechselcodes). Dabei werden die Codes nach einem mathematischen Algorithmus, zu dessen Ermittlung Daten in den jeweiligen Speichereinheiten gespeichert sind, berechnet. Nach jedem Abfragevorgang wird der Code verändert. Dies dient der Abhörsicherheit. Für die Erfindung ist es allerdings unwesentlich, ob die Wegfahrsperre mit Festcodes oder mit Wechselcodes arbeitet. Bei Wechselcodes sind alle Daten, die zur Berechnung der Codes dienen, in der betreffenden Einheit, wie Prüfeinheit P oder Steuergerät gespeichert, und bei den Festcodes sind die Codes gespeichert.

Das Anforderungssignal kann bei jedem Startvorgang ausgesendet werden. Zusätzlich können kontinuierlich in gewissen Zeitabständen Anforderungssignale erzeugt werden. Es können alle mit der Datenleitung BUS verbundene Steuergeräte Sᵢ und Fⱼ abgefragt werden oder nur ein vorher, beispielsweise nach einem Zufallsprinzip festgelegter Teil der Steuergeräte Sᵢ und Fⱼ. Die Abfrage kann auch wechseln, so daß einmal ein Teil, z.B. die ersten drei der Steuergeräte Sᵢ und Fⱼ nach ihrem Kennungscode abgefragt wird und beim nächsten Abfragevorgang ein anderer Teil, nämlich die nächsten drei Steuergeräte Sᵢ und Fⱼ. Damit ist die Wegfahrsperre sicher gegen Austausch von einzelnen Steuergeräten Sᵢ und Fⱼ.

Durch den zufälligen Wechsel der Abfrage der Steuergeräte Sᵢ und Fj wird ein Diebstahl des Kraftfahrzeugs erschwert, da auf jeden Fall alle Steuergeräte Sᵢ und Fⱼ ausgetauscht werden müßten, um das Kraftfahrzeug in Gang zu setzen. Ein Kauf von allen Steuergeräten Sᵢ und Fⱼ kann jedoch von einem Ersatzteillager gut kontrolliert werden.

## Patentansprüche

1. Wegfahrsperre für ein Kraftfahrzeug
**dadurch gekennzeichnet,**
- daß das Kraftfahrzeug Steuergeräte (Sᵢ, Fⱼ) aufweist, in denen jeweils ein Kennungscodewort gespeichert ist oder mit Hilfe eines Algorithmus erzeugt wird,
- daß das Kraftfahrzeug mindestens eine Prüfeinheit (P) aufweist, die über eine gemeinsame Datenleitung (BUS) mit den Steuergeräten (Sᵢ, Fⱼ) verbunden ist, und
- daß in der Prüfeinheit (P) die Steuergeräte (Sᵢ, Fⱼ) identifizierende Sollcodeworte gespeichert sind oder mit Hilfe eines Algorithmus errechnet werden,
- wobei die Prüfeinheit (P) zumindest bei jedem Motorstartvorgang ein Anforderungssignal über die Datenleitung (BUS) an alle oder einen Teil der Steuergeräte (Sᵢ, Fⱼ) sendet, wodurch diese veranlaßt werden, ihre Kennungscodeworte zu-rückzusenden, und
- wobei die zurückgelieferten Kennungscodeworte in der Prüfeinheit (P) mit den Sollcodeworten verglichen werden und die Prüfeinheit (P) mindestens ein Steuergerät (Sᵢ) in einem inaktiven Zustand beläßt, so daß das Starten oder das Fahren des Kraftfahrzeugs verhindert wird, falls bei der Abfrage nach den Kennungscodeworten weniger als eine vorbestimmte Anzahl der Steuergeräte (Sᵢ, Fⱼ) mit ihrem Kennungscodewort antwortet, sowie alle Steuergeräte (Sᵢ, Fⱼ) freigibt, falls bei der Abfrage mindestens die vorbestimmte Anzahl der Steuergeräte (Sᵢ, Fⱼ) mit ihrem Kennungscodewort antwortet.

2. Wegfahrsperre nach Anspruch 1, **dadurch gekennzeichnet,** daß die Prüfeinheit (P) mit einem Steuergerät (Sᵢ) eine Baueinheit (P/S1) bildet.

3. Wegfahrsperre nach Anspruch 1, **dadurch gekennzeichnet**, daß in mindestens einem der Steuergeräte (Sᵢ, Fⱼ) oder in mindestens einem tragbaren Benutzercodegeber (Gₖ) die Kennungscodeworte oder der Algorithmus zum Berechnen der Kennungscodeworte gespeichert sind.

4. Wegfahrsperre nach Anspruch 1, **dadurch gekennzeichnet**, daß in dem Benutzercodegeber (Gk) ein Benutzercodewort gespeichert ist oder mit Hilfe des Algorithmus erzeugt wird, das durch Betätigen eines Auslösemittels zu der Prüfeinheit (P) drahtlos übertragen wird und dadurch das Anforderungssignal ausgelöst wird, wenn das Benutzercodewort mit einem Berechtigungscodewort, das in der Prüfeinheit (P) gespeichert ist, übereinstimmt.

5. Wegfahrsperre nach Anspruch 1, **dadurch gekennzeichnet,** daß sie einen stationären Kennungscodegeber aufweist, in dem alle Kennungscodeworte gespeichert sind und mit dessen Hilfe entweder alle Steuergeräte (Sᵢ, Fⱼ) oder nur gegen defekte Steuergeräte ausgetauschte Steuergeräte re-initialisiert werden.

6. Verfahren zum Betreiben einer Wegfahrsperre nach einem der vorhergehenden Ansprüche, **dadurch gekennzeichnet,** daß die Prüfeinheit (P) zumindest bei jedem Motorstartvorgang ein Anforderungssignal über die Datenleitung (BUS) an alle oder einen Teil der Steuergeräte (Sᵢ, Fⱼ) sendet, wodurch diese veranlaßt werden, ihre Kennungscodeworte zurückzusenden, und die zurückgelieferten Kennungscodeworte in der Prüfeinheit (P) mit den Sollcodeworten verglichen werden, wobei die Prüfeinheit (P) mindestens ein Steuergerät (Sᵢ) in einem inaktiven Zustand beläßt, so daß das Starten oder das Fahren des Kraftfahrzeugs verhindert wird, falls bei der Abfrage nach den Kennungscodeworten weniger als eine vorbestimmte Anzahl der Steuergeräte (Sᵢ, Fⱼ) mit ihrem Kennungscodewort antwortet, sowie alle Steuergeräte (Sᵢ, Fⱼ) freigibt, falls bei der Abfrage mindestens die vorbestimmte Anzahl der Steuergeräte (Sᵢ, Fⱼ) mit ihrem Kennungscodewort antwortet.

7. Verfahren nach Anspruch 6, **dadurch gekennzeichnet,** daß die Prüfeinheit (P) mindestens ein Steuergerät (Sᵢ) nach einer vorgegebenen Zeitdauer in einen inaktiven Zustand versetzt, wenn bei der Abfrage nach den Kennungscodeworten mehr als die vorbestimmte Anzahl der Steuergeräte (Sᵢ, Fⱼ), jedoch nicht alle Steuergeräte (Sᵢ, Fⱼ) mit ihrem Kennungscodewort antworten.

8. Verfahren nach Anspruch 6, **dadurch gekennzeichnet,** daß die Prüfeinheit (P) eine Erstintialisierung durchführt, wenn sie erkennt, daß sich alle oder ein Großteil der Steuergeräte (Sᵢ, Fⱼ), die mit der Datenleitung (BUS) verbunden sind, in einem Grundzustand befinden und daß die Prüfeinheit (P) eine Re-Initialisierung durchführt, wenn erkannt wird, daß sich mindestens ein Steuergerät (Sᵢ, Fⱼ) im Grundzustand befindet und die restlichen Steuergeräte (Sᵢ, Fⱼ) sowie mindestens ein Benutzercodegeber (Gk) als berechtigt der Wegfahrsperre zugeordnet sind.

9. Verfahren nach Anspruch 6, **dadurch gekennzeichnet,** daß die Prüfeinheit (P) oder der Benutzercodegeber (Gk) die Anzahl der Motorstartvorgänge mit Hilfe eines oder mehrerer Zähler erfaßt und das Kraftfahrzeug nach einer vorgegebenen Anzahl von Motorstartvorgängen in einen inaktiven Zustand versetzt, so daß das Kraftfahrzeug nicht mehr in Bewegung gesetzt werden kann, falls der Zähler durch eine externe RESET-Einheit nicht auf Null zurückgesetzt wird.

## Claims

1. Immobilizer for a motor vehicle,
characterized
- in that the motor vehicle has control devices (Sᵢ, Fⱼ), in each of which an identification code word is stored or is generated with the aid of an algorithm,
- in that the motor vehicle has at least one test unit (P) which is connected to the control devices (Sᵢ, Fⱼ) via a common data line (BUS), and
- in that, in the test unit (P), desired code words which identify the control devices (Sᵢ, Fⱼ) are stored or calculated with the aid of an algorithm,
- the test unit (P) transmitting, at least during every engine starting operation, a request signal via the data line (BUS) to all or some of the control devices (Sᵢ, Fⱼ), as a result of which the latter are obliged to transmit back their identification code words, and
- the identification code words which are sent back being compared in the test unit (P) with the desired code words, and the test unit (P) leaving at least one control device (Sᵢ) in an inactive state, with the result that starting or driving of the motor vehicle is prevented, if fewer than a prescribed number of control devices (Sᵢ, Fⱼ) reply with their identification code word in the event of interrogation for the identification code words, and the test unit enabling all the control devices (Sᵢ, Fⱼ) if, in the event of interrogation, at least the prescribed number of control devices (Sᵢ, Fⱼ) reply with their identification code word.

2. Immobilizer according to Claim 1, characterized in that the test unit (P) and a control device (Sᵢ) form a structural unit (P/S1).

3. Immobilizer according to Claim 1, characterized in that the identification code words or the algorithm for calculating the identification code words are stored in at least one of the control devices (Sᵢ, Fⱼ) or in at least one portable user code generator (Gₖ).

4. Immobilizer according to Claim 1, characterized in that, in the user code generator (Gₖ), a user code word is stored or is generated with the aid of the algorithm, which code word is transmitted in a wire-free manner to the test unit (P) by means of actuating an initiation means, and, as a result, the request signal is initiated if the user code word corresponds to an authorization code word which is stored in the test unit (P).

5. Immobilizer according to Claim 1, characterized in that it has a steady-state identification code generator, in which all of the identification code words are stored and with the aid of which either all of the control devices (Sᵢ, Fⱼ) or only the control devices which have been exchanged for defective control devices are reinitialized.

6. Method for operating an immobilizer according to one of the preceding claims, characterized in that the test unit (P) transmits, at least during every engine starting operation, a request signal via the data line (BUS) to all Or some of the control devices (Sᵢ, Fⱼ), as a result of which the latter are obliged to transmit back their identification code words, and the identification code words which are sent back are compared in the test unit (P) with the desired code words, the test unit (P) leaving at least one control device (Sᵢ) in an inactive state, with the result that starting or driving of the motor vehicle is prevented, if fewer than a prescribed number of control devices (Sᵢ, Fⱼ) reply with their identification code word in the event of interrogation for the identification code words, and the test unit enabling all of the control devices (Sᵢ, Fⱼ) if, in the event of interrogation, at least the prescribed number of control devices (Sᵢ, Fⱼ) reply with their identification code word.

7. Method according to Claim 6, characterized in that the test unit (P) puts at least one control device (Sᵢ) into an inactive state after a predetermined time period if more than the prescribed number of control devices (Sᵢ, Fⱼ), but not all of the control devices (Sᵢ, Fⱼ), reply with their identification code word in the event of interrogation for the identification code words.

8. Method according to Claim 6, characterized in that the test unit (P) carries out a first initialization if it recognizes that all or a majority of the control devices (Sᵢ, Fⱼ) which are connected to the data line (BUS) are in a basic state, and in that the test unit (P) carries out a re-initialization if it is recognized that at least one control device (Sᵢ, Fⱼ) is in the basic state and the remaining control devices (Sᵢ, Fⱼ) as well as at least one user code generator (Gₖ) are assigned to the immobilizer as being authorized.

9. Method according to Claim 6, characterized in that the test unit (P) or the user code generator (Gₖ) detects the number of engine starting operations with the aid of one or more counters and puts the motor vehicle into an inactive state after a predetermined number of engine starting operations, with the result that the motor vehicle can no longer be moved, if the counter is not reset to zero by an external RESET unit.

## Revendications

1. Dispositif de blocage du démarrage pour un véhicule automobile caractérisé en ce
- que le véhicule automobile comporte des appareils de commande (Sᵢ, Fⱼ), dans lesquels un mot de code caractéristique est mémorisé respectivement ou est produit à l'aide d'un algorithme,
- que le véhicule automobile comporte au moins une unité de contrôle (P) qui est reliée aux appareils de commande (Sᵢ, Fⱼ) par l'intermédiaire d'une ligne commune de transmission de données (BUS), et
- que des mots de code de consigne identifiant les appareils de commande (Sᵢ, Fⱼ) sont mémorisés dans l'unité de contrôle (P) ou sont calculés à l'aide d'un algorithme,
- l'unité de commande (P) envoyant, au moins lors de chaque opération de démarrage du moteur, un signal de demande par l'intermédiaire des lignes de transmission de données (BUS) à l'ensemble ou à une partie des appareils de commande (Sᵢ, Fᵢ), pour amener ces derniers à délivrer leurs mots de code caractéristiques,
- les mots de code caractéristiques renvoyés étant comparés, dans l'unité de contrôle (P), aux mots de code de consigne et l'unité de contrôle (P) laissant au moins un appareil de commande (Sᵢ) dans un état inactif de sorte que le démarrage ou le déplacement du véhicule automobile est empêché, dans le cas où lors de l'interrogation des mots de code caractéristiques, un nombre d'appareils de commande (Sᵢ, Fⱼ) inférieur à un nombre prédéterminé répondent avec leurs mots de code caractéristiques, et libérant tous les appareils de commande (Sᵢ, Fⱼ) dans le cas où, lors de l'interrogation, au moins le nombre prédéterminé d'appareils de commande (Sᵢ, Fⱼ) répondent avec leurs mots de code caractéristiques.

2. Dispositif de blocage du démarrage selon la revendication 1, caractérisé en ce que l'unité de contrôle (P) forme avec un appareil de commande (Sᵢ) une seule unité de construction (P/S1) .

3. Dispositif de blocage du démarrage selon la revendication 1, caractérisé en ce que les mots de code caractéristiques ou l'algorithme pour le calcul du mot de code caractéristique sont mémorisés dans au moins l'un des appareils de commande (Sᵢ, Fⱼ) ou dans un moins un générateur portable de code d'utilisateur (Gₖ).

4. Dispositif de blocage du démarrage selon la revendication 1, caractérisé en ce qu'un mot de code d'utilisateur est mémorisé dans le générateur de code d'utilisateur (Gₖ) ou est produit à l'aide de l'algorithme, qui est transmis sans fil à l'unité de contrôle (P) par l'actionnement d'un moyen de déclenchement et que de ce fait le signal de demande est déclenché lorsque le mot de code d'utilisateur coïncide avec un mot de code d'autorisation qui est mémorisé dans l'unité de contrôle (P).

5. Dispositif de blocage du démarrage selon la revendication 1, caractérisé en ce qu'il comporte un générateur de code caractéristique fixe, dans lequel sont mémorisés tous les mots de code caractéristiques et à l'aide duquel tous les appareils de commande (Sᵢ, Fⱼ) ou seuls les appareils de commande remplaçant des appareils de commande défectueux sont réinitialisés.

6. Procédé pour faire fonctionner un dispositif de blocage du démarrage selon l'une des revendications précédentes, caractérisé en ce que l'unité de contrôle (P) envoie, au moins lors de chaque opération de démarrage du moteur, un signal de demande, à la totalité ou à une partie des appareils de commande (Sᵢ, Fⱼ) par l'intermédiaire de la ligne de transmission de données (BUS), ce qui amène ces appareils à envoyer leurs mots de code caractéristiques, et les mots de code caractéristiques renvoyés sont comparés à des mots de code de consigne dans l'unité de contrôle (P), l'unité de contrôle (P) laissant au moins un appareil de commande (Sᵢ) à l'état inactif de sorte que le démarrage ou le déplacement du véhicule automobile est empêché dans le cas où lors de l'interrogation des mots de code caractéristiques, un nombre d'appareils de commande (Sᵢ, Fⱼ) inférieur à un nombre prédéterminé répondent avec leurs mots de code caractéristiques, et libérant tous les appareils de commande (Sᵢ, Fⱼ) dans le cas où, lors de l'interrogation, au moins le nombre prédéterminé des appareils de commande (Sᵢ, Fⱼ) répondent avec leur mot de code caractéristique.

7. Procédé selon la revendication 6, caractérisé en ce qu'au bout d'un intervalle de temps prédéterminé, l'unité de contrôle (P) place au moins un appareil de commande (Sᵢ) dans un état inactif, lorsque lors de l'interrogation des mots de code caractéristiques, un nombre d'appareils de commande (Sᵢ, Fⱼ) supérieur au nombre prédéterminé, mais pas tous les appareils de commande (Sᵢ, Fⱼ) répondent avec leur mot de code caractéristique.

8. Procédé selon la revendication 6, caractérisé en ce que l'unité de contrôle (P) exécute une première initialisation lorsqu'elle identifie que la totalité ou une majeure partie des appareils de commande (Sᵢ, Fⱼ) qui sont reliés à la ligne de transmission de données (BUS), sont situés dans un état de base et que l'unité de contrôle (P) exécute une réinitialisation dans le cas de l'identification du fait qu'au moins un appareil de commande (Sᵢ, Fⱼ) est situé dans l'état de base et que les autres appareils de commande (Sᵢ, Fⱼ) ainsi qu'au moins un générateur de code d'utilisateur (Gₖ) sont associés, comme étant autorisés, au dispositif de blocage du démarrage.

9. Procédé selon la revendication 6, caractérisé en ce que l'unité de contrôle (P) ou le générateur de code d'utilisateur (Gₖ) détecte le nombre des processus de démarrage du moteur à l'aide d'un ou de plusieurs compteurs et place le véhicule automobile, au bout d'un nombre prédéterminé de processus de démarrage du moteur, dans un état inactif de sorte que le véhicule automobile ne peut plus être déplacé, dans le cas où le compteur n'est pas ramené à zéro par l'unité externe de remise à l'état initial.
